# EUROPÄISCHE PATENTSCHRIFT

(11) **EP 0 700 880 B1**
(45) Veröffentlichungstag und Bekanntmachung des Hinweises auf die Patenterteilung: **28.06.2000**
(21) Anmeldenummer: 95114239.7
(22) Anmeldetag: 11.09.1995
(51) Int. Cl.: B01J 2/16, C04B 35/626

(54) **Granulat und Verfahren zur Herstellung von farbigen Keramikformteilen**
Granule and process for preparing coloured ceramic articles
Granulat et procédé pour la préparation d'articles céramiques colorés

(30) Priorität: 12.09.1994 DE 4432435
(43) Veröffentlichungstag der Anmeldung: 13.03.1996
(73) Patentinhaber: BASF AKTIENGESELLSCHAFT, 67056 Ludwigshafen (DE)
(72) Erfinder: Hesse, Werner, D-67238 Obrigheim (DE); ter Maat, Johan H.H., D-68163 Mannheim (DE)
(74) Vertreter: Isenbruck, Günter, Dr.

(56) Entgegenhaltungen:
- EP-A- 0 413 231
- EP-A- 0 606 592
- EP-A- 0 658 522
- PATENT ABSTRACTS OF JAPAN vol. 014, no. 364 (M-1007), 7.August 1990 & JP-A-02 129301 (CASIO COMPUT CO LTD), 17.Mai 1990,
- CHEMICAL ABSTRACTS, vol. 105, no. 14, 6.Oktober 1988 Columbus, Ohio, US; abstract no. 119578, Y.KOIKE ET AL.: XP002011764 & JP-A-61 083 672 (HITACHI METALS)
- CHEMICAL ABSTRACTS, vol. 108, no. 14, 4.April 1988 Columbus, Ohio, US; abstract no. 117665, R. INOE ET AL.: XP002011765 & JP-A-62 275 060 (HITACHI METALS)
- CHEMICAL ABSTRACTS, vol. 116, no. 18, 4.Mai 1992 Columbus, Ohio, US; abstract no. 179720, A.UENO ET AL.: XP002011766 & JP-A-03 265 565 (TOHOKU CERAMICS)

## Beschreibung

Die Erfindung bezieht sich auf ein Granulat für die Herstellung von farbigen Keramikformteilen und auf dessen Verwendung, auf ein Verfahren zur Herstellung von farbigen Keramikformteilen und auf farbige Keramikformteile und Keramikformteilgrünlinge.

Farbige Keramikformteile können durch Sintern eines Granulats hergestellt werden. Farbgebende Teilchen werden dabei mit dem Keramikpulver und gegebenenfalls Sinterhilfsmitteln zu einem Granulat vermischt. Unter farbgebenden Teilchen versteht man dabei Teilchen, die bereits vor dem Sintern die gewünschte Farbe besitzen oder die gewünschte Farbe erst während des Sintervorgangs ausbilden. Die Vermischung der Komponenten erfolgt durch einen Mahlprozeß oder durch Auffällung aus einer Lösung. In beiden Fällen muß das Gemisch anschließend getrocknet werden, bei der Auffällung einer Lösung ist häufig die Calcinierung des Pulvergemisches nötig. Die Formgebung kann durch kalt- oder heißisostatisches Pressen erfolgen. Nach dem Versintern erhält man dann ein einfarbiges Keramikformteil. Diese beiden Arten der Farbgebung sind mit einem erheblichen technischen Aufwand verbunden.

EP-A-0 606 592 betrifft fließfähige, chemisch resistente Farbgranulate, die zur Einfärbung verschiedener Medien wie Keramik, Emaillierungen, Glas, Kunststoff, etc., insbesondere zur Einarbeitung in aggressive Medien dienen. Die Herstellung dieser Farbgranulate erfolgt durch Zerkleinerung und innige Vermischung der Granulatkomponenten, ausschließlich des Bindemittels, und anschließende Granulierung mit einem oder mehreren Bindemitteln, gegebenenfalls unter Zusatz von Wasser oder anderen geeigneten Flüssigkeiten und anschließendes Tempern und gegebenenfalls Klassieren. Die Farbgranulate dienen als Ersatz anorganischer Farbkörper oder Pigmente. Sie enthalten einen Anteil anorganischer Farbkörper/oder Pigmente von 20 bis 94,8 Gew.-%.

EP-A-0 658 522 offenbart ein Granulat für die Erzeugung von Schichten mit hoher Abriebfestigkeit. Ein wichtiges Merkmal dieser Granulate ist der Einsatz einer oder mehrerer anorganischer Elemente oder Verbindungen mit einer Mohs-Härte von mindestens 7. Die Granulate enthalten 1 bis 25 Gew.-% Bindemittel.

JP-A-61/083672 (Chem. Abstracts, vol. 105, no. 14, 06.10.88, no. 119578) betrifft Werkstücke und Werkzeuge auf Al₂O₃-Basis, die 0,2 bis 10% einer festen Lösung aus MnO₂, TiO₂ und MgO enthalten. Es wird ein braunes, gesintertes Stück erhalten. Die Werkstücke und Werkzeuge werden durch Preßverfahren, nicht durch Spritzgußverfahren, hergestellt.

JP-A-62/275060 (Chem. Abstracts, vol. 108, no. 14, 04.04.88, no. 117665) offenbart Wolframoxid enthaltende Keramiken auf ZrO₂-Basis. Es werden tiefgrüne Keramiken erhalten, die durch Preßverfahren hergestellt werden.

JP-A-03/265565 (englische Übersetzung) offenbart ein Verfahren zur Herstellung von farbigen, klaren, bruchfesten Ornamenten auf der Basis von ZrO₂. In dem Verfahren wird sehr harte ZrO₂-Pulver mit einem oder mehreren oxidischen Farbstoffen, einem polymeren Bindemittel, einem Granuliermedium wie Alkohol oder Wasser und 0,5 bis 5 Gew.-% Al₂O₃ auf 100 Gew.-% ZrO₂-Pulver gemischt und zerstoßen. Die Mischung wird granuliert, geformt, calciniert und gesintert. Das organische Bindemittel wird in einer Menge von 1 bis 3 Gew.-% eingesetzt.

Ein spezielles Verfahren zur Herstellung rubinrot gefärbter Aluminiumoxidkeramik wird in dem tschechoslowakischen Patent CS 191 122 beschrieben. Das Granulat besteht dabei aus einer Mischung aus Aluminiumoxidkeramikpulver und einem Bindemittel. Nach der Vermischung wird dieses Granulat spritzgegossen. Die Färbung der Formteile erfolgt durch Tränkung mit einer Chromchloridlösung nach einer teilweisen Entfernung des Bindemittels. Anschließend wird das getränkte Formteil versintert. Nachteilig ist allerdings, daß beim Tränken und anschließenden Trocknen Entmischungserscheinungen auftreten, weil das Chromchlorid überwiegend an der Oberfläche absorbiert wird, obwohl das Lösungsmittel in das Formteil voll eindringt. Eine homogene Farbverteilung ist damit nicht erreichbar.

Aufgabe der Erfindung ist deshalb die Bereitstellung eines Granulats für die Herstellung von farbigen Keramikformteilen. Weiterhin soll ein Verfahren zur Herstellung farbiger Keramikformteile mit guten Eigenschaften der Farbgebung und Farbverteilung, insbesondere einer homogenen Farbverteilung bereitgestellt werden. Dieses Verfahren soll einfach und flexibel sein. Eine weitere Aufgabe der Erfindung ist die Bereitstellung von homogen durchgefärbten Keramikformteilen und von Keramikformteilgrünlingen.

Die Aufgabe wird erfindungsgemäß durch die Bereitstellung eines Granulats für die Herstellung von farbigen Keramikformteilen gelöst, wobei das Granulat Keramikpulver, Bindemittel und farbgebende Teilchen enthält, wobei als Bindemittel Polyacetale eingesetzt werden. Dabei beträgt der Anteil der Bindemittel an der zu verarbeitenden Formmasse 30 Vol% bis 60 Vol%. Farbgebende Teilchen sind solche Teilchen, die bereits bei der Mischung des Granulats farbig sind oder ihre Farbe erst während des Herstellungsverfahrens, insbesondere während des Sinterprozesses entfalten. Bevorzugte farbgebende Teilchen sind Metallpulver, Metalloxidpulver, deren Precursorverbindungen, die bei Wärmezufuhr Metalloxide bilden, Farbpigmente oder Mischungen aus diesen Materialien. Besonders bevorzugt ist die Verwendung von Lanthaniden oder deren Oxiden, von Metallen der Gruppe Co, Cr, Cu Fe, Mn, Mo, Nb, Ni, Pb, Si, Sn, Ti, V, W oder deren Oxiden, insbesondere von Oxiden der Gruppe CoO, Co₂O₃, Co₃O₄, Cr₂O₃, Cu₂O, CuO, Fe₂O₃, Fe₃O₄, MnO, Mn₂O₃, MnO₂, MoO₂, MoO₃, NbO, NbO₂, Nb₂O₅, NiO, PbO, PbO₂, SiO₂, SnO, SnO₂, TiO, Ti₂O₃, TiO₂, VO₂, V₂O₅, WO₂, W₂O₅, WO₃. Besonders bevorzugt ist auch die Verwendung von Metallsalzen oder Metallkomplexen, insbesondere von Carboxylaten, Carbonaten, Nitraten oder Acetylacetonaten, die beim Sintern in die farbgebenden Oxide übergehen. Ebenso sind Buntpigmente aus den Kristallstrukturklassen Baddelleyt, Hämatit, Kassiterit, Korund, Olivin, Rutil, Sphen, Spinell und Zirkon als farbgebende Teilchen bevorzugt. Das Granulat kann dabei mehrere verschiedene farbgebende Teilchen enthalten. Dadurch kann eine Vielzahl neuer Farben kreiiert werden. Farbmodifikationen können auch dadurch erreicht werden, daß mit Metallpulvern anstatt Metalloxidpulvern gearbeitet wird. Die Farbe nach dem Sintern in oxidierender Atmosphäre ist bei der Verwendung von Metallpulvern häufig deutlich leuchtender als bei dem Einsatz des entsprechenden Metalloxidpulvers.

Bevorzugt weisen die farbgebenden Teilchen Korngrößen unter 10 µm, weiter bevorzugt unter 5 µm auf. Die farbgebenden Teilchen haben vorzugsweise einen Gewichtsanteil an der verwendeten Granulatmasse bzw. an einer Feedstockmasse für das Spritzgußverfahren von 0,05 % bis 20 %.

In einer anderen bevorzugten Ausführungsform enthält das Keramikpulver Aluminiumoxid, Zirkoniumoxid, Yttriumoxid, Ceroxid, Magnesiumoxid, SiC, Si₃N₄ oder eine Kombination bzw. ein Gemisch davon. Dabei kann das Keramikpulver auch im wesentlichen aus einem dieser Materialien bestehen. So kann bei der Herstellung einer Aluminiumoxid- oder Zirkoniumoxidkeramik Yttriumoxid oder Magnesiumoxid als Stabilisierungs- oder Sinterhilfsmittel beigegeben werden.

Die Bindemittel sind Polyacetale, insbesondere Polyoxymethylene, sowie die Co- und Homopolymerisate von Polyoxymethylenen. Dabei kann auch eine Kombination mehrerer Bindemittel eingesetzt werden.

Neben dem Bindemittel kann das Spritzgußgranulat auch organische Additive zur Dispergierung und Oberflächenmodifikation enthalten. Zusätzlich können auch Netzmittel, Plastifiziermittel oder andere Hilfsmittel, die die rheologischen Eigenschaften der Granulate bei der Verformung beeinflussen, beigemengt werden.

Die Aufgabe, ein Granulat zur Herstellung farbiger Keramikformteile bereitzustellen, wird auch durch ein Granulat gelöst, das aus einer Mischung eines ersten und eines zweiten Granulates besteht. Dabei enthält das erste Granulat Keramikpulver und Bindemittel, das zweite Granulat farbgebende Teilchen und Bindemittel. Beide Granulate weisen gleichen Volumenfüllgrad auf, um gleichen Schrumpf beim Sintervorgang zu gewährleisten. Dieses Granulat kann im Masterbatch-Verfahren eingesetzt werden, bei dem ein farbgebende Teilchen enthaltendes Granulat nach Bedarf mit Granulaten mit verschiedenen Keramikpulvern vermischt wird. Dadurch kann auf einfache Weise eine Vielzahl von Farbstoffen und Keramikpulvern kombiniert werden.

Erfindungsgemäß werden Granulate, die Keramikpulver, Bindemittel und farbgebenden Teilchen enthalten, zur Herstellung farbiger Keramikformteile im Spritzgußverfahren verwendet. Insbesondere wird ein Granulat nach einem der auf das Granulat gerichteten Ansprüche verwendet.

Nach dem in den Ansprüchen beschriebenen Verfahren werden Keramikpulver, Bindemittel und farbgebende Teilchen gemischt und zu einem Granulat von besonders hoher Homogenität verarbeitet. Aus diesem Granulat wird im Spritzgußverfahren ein grüner Formkörper (Grünling) geformt, aus dem dann das Bindemittel entfernt wird. Der entbinderte Grünling wird schließlich zu dem verwendungsfähigen Formkörper versintert. Dabei werden bevorzugt Granulate verwendet, wie sie oben beschrieben sind.

Die Formung im Spritzgußverfahren, die Entbinderung und Versinterung eines Keramikgranulates wird in den Europäischen Patenten EP 413 231, EP 444 475, EP 465 940 und EP 446 708 beschrieben. Das ausschließlich für die Verarbeitung im Spritzgußverfahren vorgesehene Granulat enthält dabei keine farbgebenden Teilchen. Überraschend wurde nun gefunden, daß ein Einarbeiten von farbgebenden Materialien zu einem sehr homogenen Spritzgußgranulat führt, das zur Herstellung homogen durchgefärbter Keramikteile geeignet ist. Diese Teile weisen eine bisher nur mit erheblich höherem Aufwand erreichbare Oberflächenqualität auf.

Das Gemisch dieser Komponenten wird üblicherweise bei Temperaturen von 115 bis 200°C geknetet oder extrudiert, anschließend abgekühlt und granuliert. Das erhaltene Granulat kann mit Hilfe üblicher Schnecken und Kolbenspritzgußmaschinen in Formen geleitet und bei Temperaturen von 175 bis 200°C und bei Drücken von 200 bis 2.000 bar verformt werden. Die entformten Grünlinge werden dann entbindert.

Das Verfahren der Entbinderung, d.h. der Entfernung des Bindemittels aus dem Keramikgrünling richtet sich nach der Art des verwendeten Binders. Die Entfernung von Bindemitteln, die Polyacetale enthalten, wird vorzugsweise in gasförmiger, säurehaltiger oder Bortrifluorid enthaltender Atmosphäre vorgenommen.

Das Versintern der geformten und entbinderten Keramikformteile geschieht vorzugsweise in Luft, in Inertgasatmosphäre, in reduzierender Atmosphäre, im Vakuum oder bei einem bestimmten Sauerstoffpartialdruck. Bei einer bevorzugten Verfahrensvariante werden Keramikformteile bestimmter Farbgebung durch bestimmte Sinterbedingungen hergestellt. Durch die Wahl der Sinteratmosphäre kann ein Farbton in Nuancen oder sehr deutlich verändert werden. Letzteres ist etwa der Fall, wenn die Wertigkeitsstufe eines Metallkations verändert wird. So wird ein mit Eisenzirkonsilikat rosa gefärbter Grünkörper beim Sintern an der Luft braun, während er bei Sintern in reduzierender Atmosphäre grün wird. Ein mit fleischfarbenem Mn₂O₃ gefärbter Grünkörper wird in Inertgasatmosphäre rosa, in Luft schwarz.

Die Aufgabe, homogen durchgefärbte farbige Keramikformteile bereitzustellen, wird erfindungsgemäß dadurch gelöst, daß Keramikteile bereitgestellt werden, die aus einem geformten, entbinderten und versinterten Granulat, wie es oben beschrieben wurde, bestehen. Bevorzugt sind die farbigen Keramikformteile nach einem Verfahren hergestellt, wie es in den Verfahrensansprüchen beschrieben ist. Diese Verfahren wurden oben bereits beschrieben. Die farbigen Keramikformteile sind vorzugsweise als dekorative Teile, insbesondere als Bestandteile von Uhren, Schmuck (Ringe, Ketten, Manschettenknöpfe, Broschen, Krawattennadeln, Armbänder, etc.), Schreibgeräten, Werkzeugen, Haushaltsgeräten, Türbeschlägen, Feuerzeugen, Vasen, Lampen, Knöpfe, Kultgegenstände (Kruzifixe, Heiligenfiguren, Rosenkränze) oder als Fliesen ausgebildet.

Erfindungsgemäß werden Keramikformteilgrünlinge bereitgestellt, die durch Formung eines Granulates, das Keramikpulver, Bindemittel und farbgebende Teilchen enthält, im Spritzgußverfahren hergestellt sind. Insbesondere sind sie durch Formung eines Granulates nach einem der auf das Granulat gerichteten Ansprüche hergestellt. Diese Granulate wurden oben bereits beschrieben.

### Beispiel 1

Ein Spritzgußgranulat enthielt 1000 g Zirkoniumdioxid, das mit 3 Mol% Y₂O₃ stabilisiert war. Die mittlere Teilchengröße betrug 0,3 µm. Beigemengt wurden 17 g Polyethylenglykol mit einem Molgewicht von ca. 800, 23 g Polybutandiolformal mit einem Molgewicht von ca. 80.000 und 168 g Polyoxymethylen mit 2 Gew.-% Butandiolformal. Als farbgebendes Material wurden 5 g Cr₂O₃ beigegeben. Die erhaltende Masse wurde in einem Kneter gemischt und mit 300 ml Butylglykol versetzt. Die.Mischung wurde unter Aufheizen weiter geknetet, wobei das Lösungsmittel langsam abgezogen wurde. Anschließend wurde noch eine Stunde bei ca. 175°C geknetet, danach abgekühlt und die Mischung granuliert.

Das erhaltene Granulat wurde zu Formteilen spritzgegossen, die dann säurekatalytisch entbindert wurden. Beim Sintern in Inertgasatmosphäre bei 1500°C wurde ein dunkelgrün gefärbtes Formteil mit einer Dichte von etwa 6 g/ml erhalten.

### Beispiel 2

Ein Spritzgußgranulat wurde wie in Beispiel 1 hergestellt. Statt Cr₂O₃ wurde allerdings im ersten Fall 20 g FeCrNi-Spinell (schwarz) und im zweiten Fall 14 g CoAl-Spinell (blau) als farbgebendes Material beigegeben.

Die erhaltenen Formteile wurden mit gasförmiger Oxalsäure bei 130°C säurekatalytisch entbindert. Das anschließende Sintern erfolgte bei 1500°C einmal an Luft, und einmal in Argonatmosphäre.

Das Versintern an Luft führte zu blauen bzw. schwarzen Formteilen. Die Verwendung einer Argonatmosphäre führte dagegen zu einem deutlich leuchtenderen Blauton, während das Schwarz unverändert blieb.

### Beispiel 3

800 g Yttrium-stabilisiertes Zirkondioxid wurde mit 200 g Aluminiumoxid und 50 g Cr₂O₃ und den übrigen Binderkomponenten und Additiven wie in Beispiel 1 zu einem Granulat verarbeitet, spritzgegossen und entbindert. Beim Sintern an Luft bei 1600°C wurde ein rubinrot gefärbtes Formteil erhalten.

### Beispiel 4

700 g Aluminiumoxid mit einer mittleren Korngröße von 0,8 µm wurde mit 7 g Co-Pulver bzw. 20 g CoAl₂O₄ und den übrigen Binderkomponenten und Additiven wie in Beispiel 1 zu einem Granulat verarbeitet, spritzgegossen und entbindert. Beim Sintern an Luft bei 1650°C wurde in beiden Fällen ein blaues Formteil erhalten, wobei die Verwendung von Cobaltpulver zu einem leuchtenden Blau, die Verwendung von CoAl₂O₄ zu einem deutlich dunkleren Blau führte.

### Beispiel 5

1000 g Yttrium-stabilisiertes Zirkonoxid wurde mit 30 g Mn₂O₃ und den übrigen Binderkomponenten und Additiven wie in Beispiel 1 zu einem Granulat verarbeitet, spritzgegossen und entbindert. Beim Sintern an Luft bei 1500°C wurde ein braunschwarz gefärbtes Formteil erhalten, während beim Sintern in Inertgasatmosphäre bei 1500°C ein rosa gefärbtes Formteil erhalten wurde.

## Patentansprüche

1. Granulat für die Herstellung von farbigen Keramikformteilen enthaltend Keramikpulver, Bindemittel und gleiche oder verschiedene farbgebende Teilchen, in dem als Bindemittel Polyacetale eingesetzt werden und der Anteil der Bindemittel an der zu verarbeitenden Formmasse 30 Vol% bis 60 Vol% beträgt und die farbgebenden Teilchen einen Anteil an dem Granulat von 0,05 bis 20 Gew.-% haben.

2. Granulat nach Anspruch 1, dadurch gekennzeichnet, daß die farbgebenden Teilchen Korngrößen unter 10 µm, vorzugsweise unter 5 µm aufweisen.

3. Granulat, bestehend aus einer Mischung eines ersten Granulates, das Keramikpulver und Bindemittel enthält, und eines zweiten Granulates, das farbgebende Teilchen und Bindemittel enthält, wobei das erste und das zweite Granulat gleichen Volumenfüllgrad aufweisen.

4. Verwendung eines Granulates, das Keramikpulver, Bindemittel und farbgebende Teilchen enthält, zur Herstellung farbiger Keramikformteile im Spritzgußverfahren.

5. Verwendung nach Anspruch 4, wobei ein Granulat nach einem der Ansprüche 1 bis 3 eingesetzt wird.

6. Verfahren zur Herstellung von farbigen Keramikformteilen, in dem ein Granulat nach einem der Ansprüche 1 bis 3 im Spritzgußverfahren geformt, entbindert und versintert wird,
wobei das Entbindern vorzugsweise in gasförmiger, säurehaltiger oder Bortrifluorid enthaltender Atmosphäre vorgenommen wird und
wobei die geformten, entbinderten Keramikformteile vorzugsweise in Luft, in Inertgasatmosphäre, in reduzierender oder oxidierender Atmosphäre oder im Vakuum versintert werden.

7. Verfahren nach Anspruch 6, dadurch gekennzeichnet, daß Keramikformteile bestimmter Farbgebung durch bestimmte Sinterbedingungen hergestellt werden.

8. Farbige Keramikformteile, bestehend aus einem geformten, entbinderten und versinterten Granulat nach einem der Ansprüche 1 bis 3, die vorzugsweise als dekorative Teile, insbesondere als Bestandteile von Uhren, Schmuck, Schreibgeräten, Werkzeugen, Haushaltsgeräten, Türbeschlägen, Feuerzeugen oder als Fliesen ausgebildet sind.

9. Keramikformteilgrünlinge, die durch Formung eines Granulates, das Keramikpulver, Bindemittel und farbgebende Teilchen enthält, im Spritzgußverfahren hergestellt sind.

## Claims

1. A granulate for producing colored ceramic shaped parts comprising ceramic powder, binder and identical or different color-producing particles in which polyacetals are used as the binder and the proportion of binder in the molding composition to be processed is from 30% by volume to 60% by volume the color-producing particles are present in the granulate in a proportion of from 0.05 to 20% by weight.

2. A granulate as claimed in claim 1, wherein the color-producing particles have particle sizes below 10 µm, preferably below 5 µm.

3. A granulate comprising a mixture of a first granulate comprising ceramic powder and binder and a second granulate comprising color-producing particles and binder, where the first and second granulate have the same inorganic solids content by volume.

4. Use of a granulate comprising ceramic powder, binder and color-producing particles for producing colored ceramic shaped parts by injection molding.

5. Use as claimed in claim 4, where the granulate used is as claimed in one of claims 1 to 3.

6. A process for producing colored ceramic shaped parts, in which a granulate as claimed in one of claims 1 to 3 is injection molded, subjected to binder removal and sintered, where the binder removal is preferably carried out in a gaseous atmosphere containing acid or boron trifluoride and where the shaped ceramic parts from which the binder has been removed are preferably sintered in air, in an inert gas atmosphere, in a reducing or oxidizing atmosphere or under reduced pressure.

7. A process as claimed in claim 6, wherein ceramic shaped parts having a particular coloration are produced by particular sintering conditions.

8. A colored ceramic shaped part comprising a granulate as claimed in one of claims 1 to 3, which has been shaped, subjected to binder removal and sintered, which is preferably configured as a decorative part, in particular as a component of a clock or watch, jewelry, a writing implement, a tool, a household article, a decorative mounting on a door, a lighter or as a tile.

9. An unfired ceramic shaped part which is produced by injection molding a granulate comprising ceramic powder, binder and color-producing particles.

## Revendications

1. Produit de granulation pour la préparation de pièces moulées en céramique colorées, contenant de la poudre céramique, du liant et des particules colorantes identiques ou différentes, produit de granulation dans lequel on met en oeuvre, comme liants, des polyacétals, la fraction de liant étant de 30% en volume à 60% en volume de la masse de moulage à traiter et les particules colorantes représentant une fraction de 0,05 à 20% en poids du produit de granulation.

2. Produit de granulation suivant la revendication 1, caractérisé en ce que les particules colorantes présentent des tailles de grains inférieures à 10 µm, de préférence inférieures à 5 µm.

3. Produit de granulation, constitué d'un mélange d'un premier produit de granulation qui contient de la poudre céramique et du liant et d'un deuxième produit de granulation qui contient des particules colorantes et du liant, les premier et deuxième produits de granulation présentant un degré de remplissage volumique identique.

4. Utilisation d'un produit de granulation, qui contient de la poudre céramique, du liant et des particules colorantes, pour la fabrication de pièces moulées en céramique colorées dans un procédé de moulage par injection.

5. Utilisation suivant la revendication 4, dans laquelle un produit de granulation suivant l'une des revendications 1 à 3 est mis en oeuvre.

6. Procédé de préparation de pièces moulées en céramique colorées, dans lequel un produit de granulation suivant l'une des revendications 1 à 3 est moulé dans un procédé de moulage par injection, débarrassé du liant et fritté, procédé dans lequel l'élimination du liant est de préférence effectuée dans une atmosphère gazeuse, contenant de l'acide ou du trifluorure de bore et dans lequel les pièces moulées en céramique débarrassées du liant sont frittées de préférence dans de l'air, dans une atmosphère de gaz inerte, dans des atmosphères réductrices ou oxydantes ou sous vide.

7. Procédé suivant la revendication 6, caractérisé en ce que des pièces moulées en céramique de coloration déterminée sont préparées par des conditions de frittage déterminées.

8. Pièces moulées en céramique colorées, constituées à partir d'un produit de granulation moulé, débarrassé du liant et fritté selon l'une des revendications 1 à 3, pièces moulées qui sont de préférence réalisées sous la forme de pièces décoratives, en particulier de composants d'horloge, d'enjolivures, d'enregistreurs, d'outils, d'appareils ménagers, de garnitures de porte, de briquets ou sous la forme de carreaux.

9. Ebauches crues de pièces moulées en céramique, qui sont préparées dans un procédé de moulage par injection par mise en forme d'un produit de granulation qui contient de la poudre céramique, du liant et des particules colorantes.
